# EUROPEAN PATENT APPLICATION

(11) **EP 4 564 552 A1**
(43) Date of publication of application: **04.06.2025**
(21) Application number: 23213777.8
(22) Date of filing: 01.12.2023
(51) Int. Cl.: H01M 50/207, H01M 50/244, H01M 50/249, H01M 50/262, H01M 50/289, H01M 50/358

(54) **A BATTERY MODULE, A BATTERY STACK AND A BATTERY COMPARTMENT**

(71) Applicant: VOLVO TRUCK CORPORATION, 405 08 Göteborg (SE)
(72) Inventor: Lindelöw, Fredrik, 541 94 Skövde (SE); Irannezhad, Mike, 411 20 Göteborg (SE); Jonsson, Kasper, 417 57 Göteborg (SE)
(74) Representative: Kransell & Wennborg KB

(57) **Abstract**

A stackable battery module (1) comprising an enclosure (10) formed by a top plate (12), a bottom plate (14) and side walls (16). Further, at least one battery cell (22) is at least partially enclosed by the enclosure (10). The enclosure (10) comprises a top flange (24) and a bottom flange (26). The top flange (24) and the bottom flange (26) extend away from the enclosure (10). The top flange (24) and the bottom flange (26) each comprises a mounting hole (28) and a first type of gas vent (30). The first type of gas vent (30) being configured to enable fluid communication through the respective flange (24, 26), and a second type of gas vent (32) is arranged at the first end (18) and/or at the second end (20) of the side walls (16). The second type of gas vent (32) is configured to enable fluid communication through the side walls (16). The disclosure also relates to a stack of battery modules (1) and to a battery compartment (3) comprising the stack of battery modules (1). A vehicle comprising the battery compartment (3) is also disclosed.

## Description

### TECHNICAL FIELD

The disclosure relates generally to stackable battery modules. In particular aspects, the disclosure relates to a battery module, a battery stack and to a battery compartment, as well as to a vehicle or vessel comprising the battery compartment. The disclosure can be applied to heavy-duty vehicles, such as trucks, buses, and construction equipment, among other vehicle types, but also to marine vessels. Although the disclosure may be described with respect to a particular vehicle, the disclosure is not restricted to any particular vehicle.

### BACKGROUND

The disclosure relates to energy storage systems in battery electric vehicles, such as trucks. Battery cells are stacked in a battery module which is fastened to the housing and/or to other modules. In a battery electric truck, the modules may be stacked on top of each other and height space between the modules highly affect the volumetric energy efficiency.

Current fixation methods for battery electric trucks leave a volumetric gap between the stacked modules, hence reducing stored energy capacity significantly. A reason for this is that the battery cell venting design has to consider the fixation design.

Current designs are usually optimized for fixation or for cell venting capabilities. Existing fixation solutions fixate the sides of the battery modules. For instance, studs may protrude from the module into a battery module housing. Specialized tolerance compensating bolts located between the module and the housing also exist.

Cell venting solutions are usually designed to create a path between a cell vent and the housing. However, this can generate empty volumetric space between stacked modules, hence contributing to lowering the volumetric energy efficiency.

### SUMMARY

According to a first aspect of the disclosure, a stackable battery module is provided which has a first extension along a first axis, a second extension along a second axis and a third extension along a third axis. The first, second and third axes being perpendicular to each other. The battery module comprises an enclosure formed by a top plate, a bottom plate and side walls. The top plate and the bottom plate extend orthogonally to the first axis, and the side walls have a first end adjacent to the top plate and a second end adjacent to the bottom plate. The side walls extend in parallel with the first axis between the top plate and the bottom plate. The battery module further comprises at least one battery cell, at least partially enclosed by the enclosure. The enclosure comprises a top flange and a bottom flange arranged at least along a part of a perimeter of the enclosure around the first axis. The top flange and the bottom flange extend in a plane parallel with the second axis and the third axis, away from the enclosure.

The top flange and the bottom flange each comprises a mounting hole and a first type of gas vent. The first type of gas vent is configured to enable fluid communication through the respective flange. A second type of gas vent is arranged at the first end and/or at the second end of the side walls. The second type of gas vent is configured to enable fluid communication through the side walls.

The first aspect of the disclosure may seek to improve energy storage capability or volumetric energy efficiency. A technical benefit may include that fixation is located between the modules top and bottom, via the mounting holes of the respective battery modules, i.e. module to module instead of between the module and housing. Venting is integrated in the fixation in that the first type of gas vent is located in the same flange as the mounting hole. Thereby, fixation combined with the gas vents are incorporated in the same configuration. Gas vented from the enclosure via the second type of gas vent flow along the first axis via the first type of gas vent in the top and bottom flanges. When the battery module is installed in a battery compartment, the vented heat or gas flows between the side walls of the enclosure and housing walls of the battery compartment, via the first type of gas vent. In other words, in operation, the battery cells generate heat, and in a runaway situation, hot gases may be emitted, which are vented out of the enclosure, to an outside of the side walls.

The side walls, the top plate and the end plate may be structural elements, i.e. elements configured to provide stability and rigidity to the battery module and to physically support and protect the battery cells of the enclosure. Such structural elements may be metal beams or metal plates. Side walls which are aligned in a plane parallel with the first axis and the second axis are also known as end plates. Side walls aligned in a plane parallel with the first axis and the third axis may be mechanically connected to the end plates. The top plate and/or the bottom plate may be mechanically connected to the end plates. Optionally, the side walls aligned in a plane parallel with the first axis and the third axis may be connected to the top plate and the bottom plate.

Optionally in some examples, including in at least one preferred example, the first type of vent and the second type of vent are through-holes which extend through the flange and the side walls, respectively, thereby enabling the fluid communication from inside the enclosure to an outside of the enclosure. When the battery module is installed in a battery compartment, such as when a plurality of battery modules are installed in the battery compartment, the first type of gas vent enables fluid communication between stacked battery modules so that heated air and gas exiting the respective enclosure may flow along the first axis and exit the battery compartment through housing vents.

Optionally in some examples, including in at least one preferred example, each one of the top flange and the bottom flange comprises a plurality of mounting holes and a plurality of the first type of gas vent. The mounting holes and the plurality of the first type of gas vent are alternatingly arranged along the perimeter of the enclosure around the first axis. A technical benefit may include integrating the fixation and the venting of the modules in a space-saving manner such that the mounting holes and the first type of vent share the same space along the perimeter of the enclosure and thereby contribute to limiting the size of the battery module in a direction perpendicular to the first axis.

Optionally in some examples, including in at least one preferred example, the first type of gas vent is aligned with the second type of gas vent along the perimeter of the enclosure around the first axis. A technical benefit may include improved fluid communication from the inside of the enclosure to the outside of the enclosure and further along the battery module in a direction parallel with the first axis. The first type of vent may be located in the top and/or bottom flange adjacent the enclosure. Thereby, heated air and/or gases may flow along the first axis near the enclosure, which allows for a more compact battery installation where the battery module, or stack of battery modules, is to be applied.

Optionally in some examples, including in at least one preferred example, the first type of gas vent is a cutout in the top flange and/or the bottom flange. A technical benefit may include a compact configuration of the battery module in a direction perpendicular to the first axis. The cutouts may be arranged in the top and/or bottom flange, between the mounting holes, such that the cutouts and the mounting holes are alternatingly arranged along the perimeter of the enclosure around the first axis.

Optionally in some examples, including in at least one preferred example, the top flange and/or the bottom flange are integral extensions of the top plate and the bottom plate, respectively, or the top flange and/or the bottom flange are integral extensions of the side walls, extending orthogonally from the side walls. A technical benefit may include a simpler structure where the flange is manufactured from the same piece of plate as the top plate and/or the bottom plate, or from the same piece of plate(s) as the side walls.

Optionally in some examples, including in at least one preferred example, the battery module is configured to be stacked along the first axis with at least one further battery module. The mounting hole of the top flange is configured to be aligned with a mounting hole of a bottom flange of the at least one further battery module, and/or the mounting hole of the bottom flange is configured to be aligned with a mounting hole of a top flange of the at least one further battery module. A technical benefit may include a more compact design where the battery modules are fixated together along the first axis, via the mounting holes, instead of being fixated with a battery compartment in which the battery stack is installed. The fixation between the top and bottom flanges of adjacent battery module also avoids a volumetric gap between the battery modules, thereby providing a more compact size of the battery stack along the first axis.

Optionally in some examples, including in at least one preferred example, the at least one battery cell is arranged on the bottom plate, physically in contact with the bottom plate. A technical benefit may include a more compact battery module and improved support and cooling of the battery cells in contact with the bottom plate.

Optionally in some examples, including in at least one preferred example, the bottom plate is a thermal plate. A technical benefit may include improved cooling or heating of the battery cells in physical contact with the bottom plate/thermal plate. The thermal plate may comprise internal fluid conduits comprising fluid, which fluid may flow through the fluid conduits to transport heat to or from the battery cells of the battery modules.

Optionally in some examples, including in at least one preferred example, the top plate is offset from a top end of the at least one battery cell, along the first axis, such that a first ventilation volume is formed in the enclosure between the top plate and the top end of the at least one battery cell, the first ventilation volume is in fluid communication with the second type of gas vent. A technical benefit may include that any heated air or gases of the battery cells may flow via the first ventilation volume towards the second type of vent and exit the enclosure via the second type of vent.

According to a second aspect of the disclosure, a battery stack comprises at least two stackable battery modules according to any of the examples of the first aspect of the disclosure. The battery stack has a top battery module at a top end of the battery stack and a bottom battery module at a bottom end of the battery stack, as seen along the first axis. At least one of the at least two stackable battery modules is stacked and adjacent at least one further battery module along the first axis such that the mounting hole of the bottom flange of one stackable battery module is aligned with the mounting hole of the top flange of the adjacent stackable battery module. The at least two stackable battery modules are fixed in relation to each other at the mounting holes by a fastener. The second aspect of the disclosure may seek to provide a battery stack comprising stacked battery modules which are fixed in relation to each other via the mounting holes, i.e. along the first axis, thereby enabling a more compact battery stack and increased volumetric energy efficiency.

Optionally in some examples, including in at least one preferred example, adjacent stackable battery modules are physically in contact with each other via adjacent top plates and bottom plates of the respective battery modules. A technical benefit may include that a height of the battery stack along the first axis is reduced and that energy storage capability and/or volumetric energy efficiency is further improved.

Optionally in some examples, including in at least one preferred example, the first type of gas vent of the bottom flange of one stackable battery module is aligned with the first type of gas vent of the top flange of the adjacent stackable battery module such that fluid communication is enabled between the at least two stackable battery modules along the first axis via the first type of gas vent of the respective stackable battery module. A technical benefit may include enabling fluid communication along a whole stack of battery modules from a bottom battery module to a top battery module via the first type of gas vent of the respective battery modules.

According to a third aspect of the disclosure, a battery compartment is provided which comprises a housing and the battery stack according to any of the examples of the second aspect of the disclosure. The housing comprises housing walls parallel with the first axis, which housing walls at least partially enclose the battery stack. The housing walls and the side walls of the stackable battery modules form gas chimneys extending along the first axis between the side walls and the housing walls. The gas chimneys are partitioned along the first axis by the first type of gas vent. Each of the gas chimneys is in fluid communication with the first ventilation volume of the respective battery module via the second type of gas vent. The third aspect of the disclosure may seek to increase the volumetric energy efficiency by integrating the gas chimneys in the stack of battery modules by enabling fluid communication through the first type of gas vent in the flanges of the battery modules. Since the gas chimneys are integrated in the battery stack, there is no need to provide venting channels in the housing of the battery compartment.

Optionally in some examples, including in at least one preferred example, the housing walls comprise at least one housing vent configured to enable fluid communication through the housing wall between the gas chimney of the battery compartment and an outside of the battery compartment. A technical benefit may include that hot air or gases may be ventilated from the battery compartment.

Optionally in some examples, including in at least one preferred example, the at least one housing vent comprises a degassing unit. A technical benefit may include that the degassing unit may serve to equalize pressure in the battery compartment. During thermal runaway, heat and gases may build a pressure in the battery compartment. At a certain pressure threshold, the degassing unit may open to release the pressure. The degassing unit may alternatively equalize an underpressure in the battery compartment with ambient pressure outside the housing/battery compartment.

Optionally in some examples, including in at least one preferred example, the battery compartment further comprises at least one support surface fixed in relation to said battery compartment. The support surface has at least one support fixation point formed thereon. The mounting hole of the bottom flange of the bottom battery module of the battery stack and the fixation point of the support surface are in alignment and the battery stack is fixed to said support surface at least at one fixation point by a fastener. A technical benefit may include fixing the entire battery stack by fixing the bottom battery module to the support surface. The battery stack may still be supported, in a lateral (e.g. horizontal) direction in relation to the first housing, by the top and bottom flanges abutting the housing walls of the battery compartment.

Optionally in some examples, including in at least one preferred example, a layer of thermal insulation is sandwiched between the bottom battery module and the support surface. A technical benefit may include thermally insulating the battery compartment from the stack of battery modules. Thereby, the battery compartment is thermally insulated from heat generated by the battery modules of the battery stack and the heat is prevented from affecting an ambient surrounding of the battery compartment.

According to a fourth aspect of the disclosure, a vehicle is provided which comprises the battery compartment according to any of the examples of the third aspect of the disclosure. The fourth aspect of the disclosure may seek to provide a vehicle having an increased volumetric energy efficiency, which improves energy storage capability of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to the fourth aspect of the disclosure.
**FIG. 2** is a prior art battery stack.
**FIG. 3** is a front view of a battery module according to an example of the first aspect of the disclosure.
**FIG. 4** is a top-down view of a battery module according to an example of the first aspect of the disclosure.
**FIG. 5** is a side view of a battery module according to an example of the first aspect of the disclosure.
**FIG. 6** is a front view of a battery stack according to an example of the second aspect of the disclosure.
**FIG. 7** is a side view of a battery module according to an example of the second aspect of the disclosure.
**FIG. 8** is a front view of a battery compartment according to an example of the third aspect of the disclosure.
**FIG. 9** is a top-down view of a battery compartment according to an example of the third aspect of the disclosure.

### DETAILED DESCRIPTION

The detailed description set forth below provides information and examples of the disclosed technology with sufficient detail to enable those skilled in the art to practice the disclosure.

A volumetric-efficient fixation, combined with volumetric-efficient cell venting achieves an improved energy storage capability. By combining the two into a common design, the volumetric gap between the modules and cells can be reduced, hence higher volumetric energy efficiency.

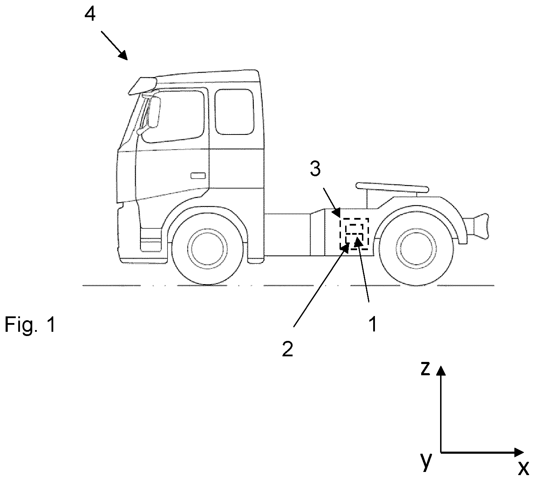

**FIG. 1** is an exemplary vehicle 4 according to the fourth aspect of the disclosure. The vehicle comprises a battery compartment 3 according to the third aspect of the disclosure. The battery compartment comprises a battery stack 2 according to the second aspect of the disclosure, which in turn comprises at least two stackable battery modules 1 according to the first aspect of the disclosure. Alternatively, the battery module(s) 1, the battery stack 2 and the battery compartment may be comprised in a stationary unit, i.e. the fourth aspect of the disclosure is not limited to vehicles 4 or vessels.

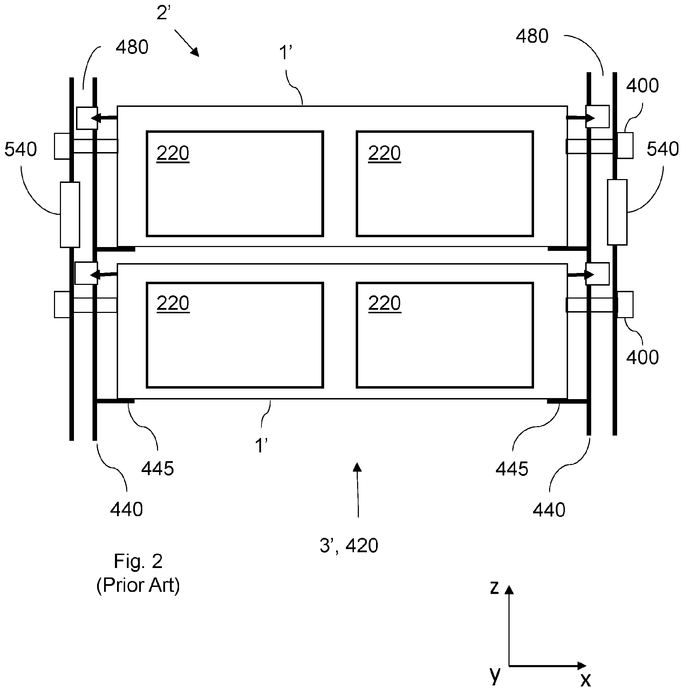

**Fig. 2** shows a prior art battery stack 2' comprising two stacked battery modules 1' in a battery compartment 3'. The battery modules 1' have a first extension along a first axis z, a second extension along a second axis x and a third extension along a third axis y. The first, second and third axes z, x, y are perpendicular to each other. The battery compartment comprises a housing 420, having housing walls 440. The battery modules 1' are mounted in the housing 420 on housing flanges 445 projecting from the housing walls 440. The battery modules 1' are further fixed in their positions by fasteners 400 engaging sides of the battery modules 1' through the housing walls 440.

Any heated air or gases emitted by battery cells 220 of the battery modules 1' is blocked in a vertical direction, i.e. along the first axis z, by the housing flanges 445. Therefore, the housing 420 is provided with housing chimneys 480 extending along the first axis inside the housing walls 440. Heated air or gases may enter the housing chimneys 480 through wall vents, as indicated by the arrows, and exit the battery compartment 3' via vents 540. However, the housing chimneys 480 occupy space in a horizontal direction and the arrangement of the battery modules 1' on housing flanges 445 occupies space in the vertical direction, resulting in an energy-inefficient use of space. The present disclosure seeks to improve on the prior art by increasing the volumetric energy efficiency of battery modules, stacks and battery compartments.

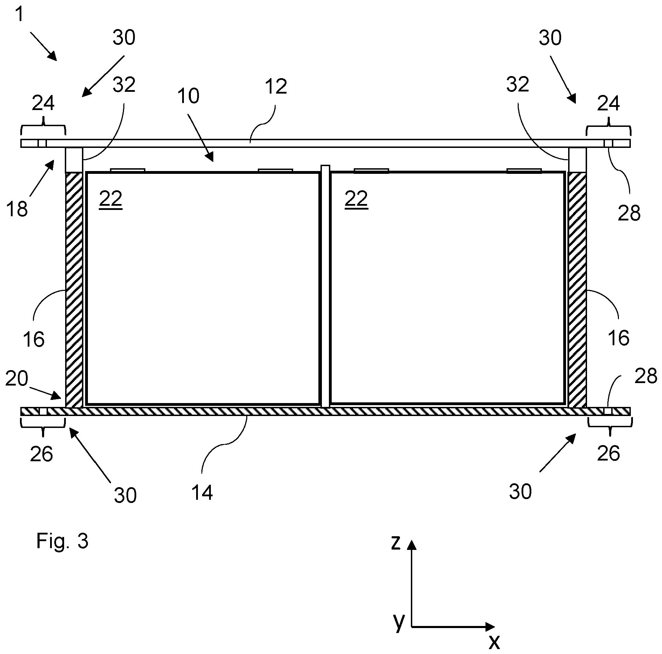

**Fig. 3** shows a stackable battery module 1 according to the first aspect of the disclosure. The battery module 1 has a first extension along the first axis z, a second extension along the second axis x and a third extension along the third axis y. The first, second and third axes z, x, y are perpendicular to each other. The battery module 1 comprises an enclosure 10 formed by a top plate 12, a bottom plate 14 and side walls 16. The top plate 12 and the bottom plate 14 extend orthogonally to the first axis z. The side walls 16 have a first end 18 adjacent to the top plate 12 and a second end 20 adjacent to the bottom plate 14. The side walls 16 extend in parallel with the first axis z between the top plate 12 and the bottom plate 14. At least one battery cell 22 is at least partially enclosed by the enclosure 10. The enclosure 10 comprises a top flange 24 and a bottom flange 26 arranged at least along a part of a perimeter of the enclosure 10 around the first axis z. The top flange 24 and the bottom flange 26 extend in a plane parallel with the second axis and the third axis, away from the enclosure 10.

The top flange 24 and the bottom flange 26 each comprises a mounting hole 28 and a first type of gas vent 30. The first type of gas vent 30 is configured to enable fluid communication through the respective flange 24, 26. A second type of gas vent 32 is arranged at the first end 18 and/or at the second end 20 of the side walls 16. The second type of gas vent 32 is configured to enable fluid communication through the side walls 16.

The first aspect of the disclosure provides a fixation of the battery modules 1 located between the modules 1 top plate 12 and bottom plate 14, via the mounting holes 28 of the respective battery modules 1. In other words, the battery modules 1 may be fixed module to module instead of between the battery module 1' and the housing 420, as shown in the prior art example of **Fig. 2****.**

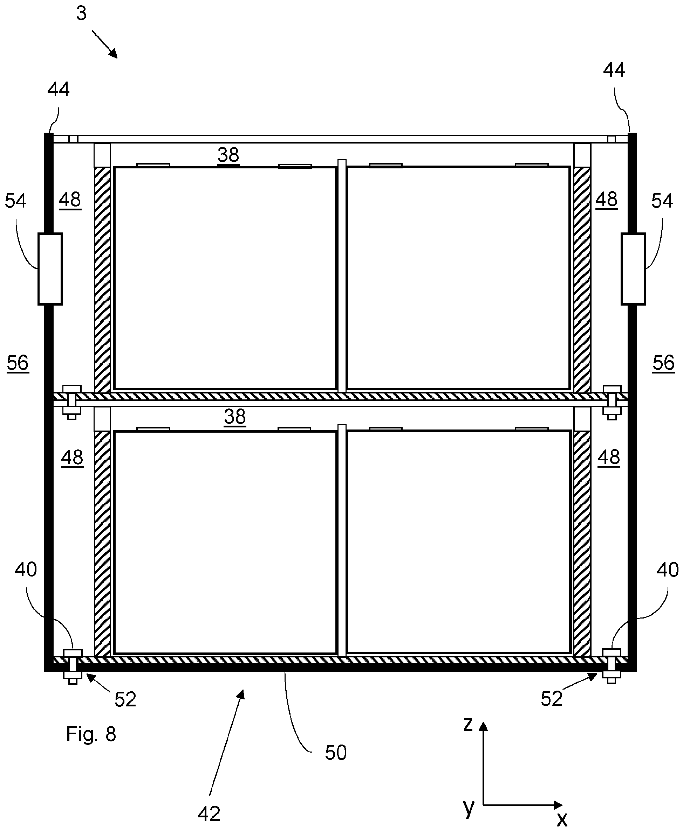

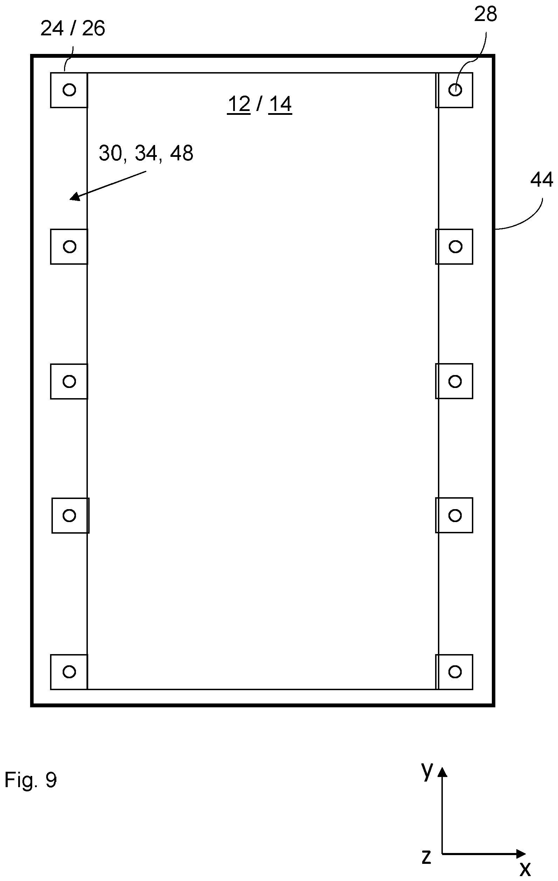

In the present disclosure, venting is integrated in the fixation in that the first type of gas vent 30 is located in the same top or bottom flange 24, 26 as the mounting hole 28. Thereby, fixation combined with the vents are incorporated in the same configuration. Gas vented from the enclosure via the second type of gas vent 32 may along the first axis z via the first type of gas vent 30 in the top and bottom flanges 24, 26. When the battery module 1 is installed in the battery compartment 3 (see **Fig. 8** and **Fig. 9**), the vented gas may flow between the side walls 16 of the enclosure and housing walls 44 of the battery compartment 3, via the first type of gas vent 30, to be further explained hereinbelow. In operation, the battery cells 22 generate heat, and during thermal runaway situation hot gases may be emitted, which may be vented out of the enclosure 10, to an outside of the side walls 16.

The side walls 16, the top plate 12 and the end plate 14 may be structural elements, i.e. elements configured to provide stability and rigidity to the battery module 1 and to physically support and protect the battery cells 22 of the enclosure 10. Such structural elements may be metal beams or metal plates. Side walls 16 which are aligned in a plane parallel with the first axis z and the second axis x are also known as end plates. Side walls 16 aligned in a plane parallel with the first axis z and the third axis y may be mechanically connected/fixed to the end plates. The top plate 12 and/or the bottom plate 14 may be mechanically connected/fixed to the end plates. Optionally, the side walls 16 aligned in a plane parallel with the first axis z and the third axis y may be mechanically connected/fixed to the top plate 12 and the bottom plate 14.

In some examples, the first type of vent 30 and the second type of vent 32 comprise through-holes which extend through the flange 24, 26 and the side walls 16, respectively, thereby enabling the fluid communication from inside the enclosure 10 to an outside of the enclosure 10. When the battery module is installed in a battery compartment 3, such as when a plurality of battery modules 1 are installed in the battery compartment 3, the first type of gas vent 30 enables fluid communication between stacked battery modules 1 so that heated air and gas exiting the respective enclosures 10 may flow along the first axis z and exit the battery compartment 3 through housing vents 54 (to be further explained below).

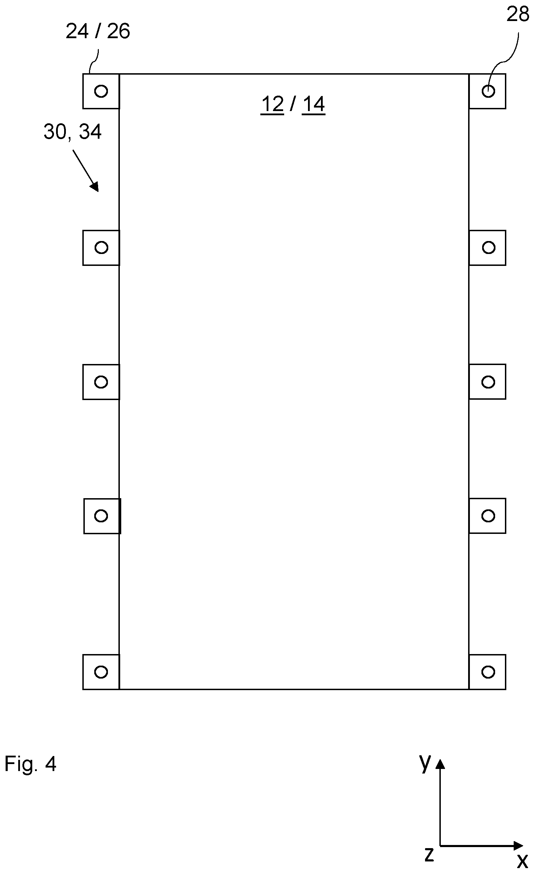

In some examples, as shown in **Fig. 4****,** which is a view of the battery module 1 along the first axis z, each one of the top flange 12 and the bottom flange 14 may comprise a plurality of mounting holes 28 and a plurality of the first type of gas vent 30. The mounting holes 28 and the plurality of the first type of gas vent 30 may be alternatingly arranged along the perimeter of the enclosure 10 around the first axis z. In **Fig. 4****,** the enclosure 10 is hidden from view behind the top plate 12 or bottom plate 14. The enclosure 10 occupies substantially the same area as illustrated by the rectangle-shaped top plate 12 or bottom plate 14. Accordingly, the fixation and the venting of the battery modules 1 may be integrated in a space-saving manner such that the mounting holes 28 of the top flange 24 and/or bottom flange 26 and the first type of vent 30 share the same space along the perimeter of the enclosure 10. Thereby, they contribute to limiting a size of the battery module 1 in a direction perpendicular to the first axis, i.e. in a substantially horizontal direction.

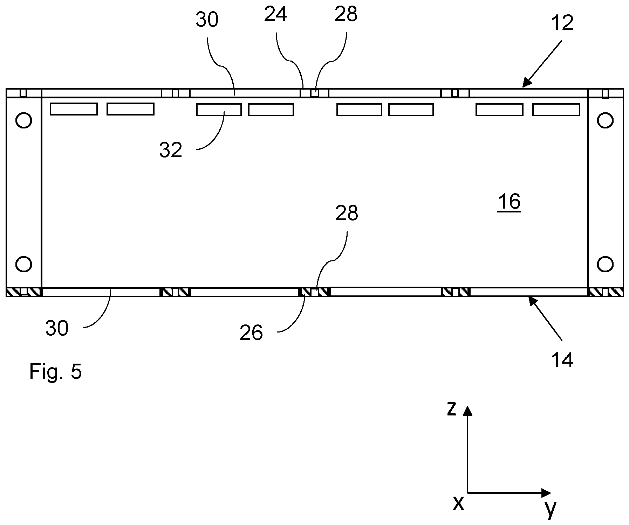

As shown in **Fig. 5****,** which is a view of the battery module 1 along the second axis x, the first type of gas vent 30 may be aligned with the second type of gas vent 32 along the perimeter of the enclosure 10 around the first axis z. In this manner, fluid communication from the inside of the enclosure 10 to the outside of the enclosure 10, and further along the battery module 1 in a direction parallel with the first axis z, is improved. The first type of vent 30 may be located in the top and/or bottom flange 24, 26 adjacent the enclosure 10. Thereby, heated air and/or gases may flow along the first axis z near the enclosure 10, which allows for a compact battery installation in a battery stack 2 in which the battery modules 1, may be arranged.

**Fig. 4** illustrates how the first type of gas vent 30 may be a cutout 34, or indentation, in the top flange 24 and/or the bottom flange 26 which allows for a compact configuration of the battery module 1 in a (horizontal) direction perpendicular to the first axis z. The cutouts 34 may be arranged in the top and/or bottom flange 24, 26, between the mounting holes 28, such that the cutouts 34 and the mounting holes 28 are alternatingly arranged along the perimeter of the enclosure 10 around the first axis z.

The top flange 24 and/or the bottom flange 26 may be integral extensions of the top plate 12 and the bottom plate 14, respectively, or the top flange 24 and/or the bottom flange 26 may be integral extensions of the side walls 16, extending orthogonally from the side walls 16. The flange may thereby be manufactured from the same piece of material as the top plate 12 and/or the bottom plate 14, or from the same piece(s) of material as the side walls 16.

The battery module 1 may be configured to be stacked along the first axis z with at least one further battery module 1. The mounting hole 28 of the top flange 24 may be configured to be aligned with a mounting hole 28 of a bottom flange 26 of the at least one further battery module 1. In addition, or alternatively, the mounting hole 28 of the bottom flange 26 may be configured to be aligned with a mounting hole 28 of a top flange 24 of the at least one further battery module 1. Thereby, a more compact design may be provided, where the battery modules 1 are fixated together along the first axis z, via the mounting holes 28, instead of being fixated with housing walls 440 of the battery compartment 3', as shown in the prior art example of **Fig. 2****.** The fixation between the top and bottom flanges 24, 26 of adjacent battery modules 1 also avoids a volumetric gap between the battery modules 1, thereby providing a more compact size of the battery stack 2 along the first axis z.

The at least one battery cell 22 may be arranged on the bottom plate 14, such as physically in contact with the bottom plate 14, resulting in a more compact battery module 1 and improved support and cooling of the battery cells 22 in contact with the bottom plate 14.

In some examples, the bottom plate may be a thermal plate. Thereby, cooling or heating of the battery cells 22 in physical contact with the bottom plate 14/thermal plate may be improved. The thermal plate may comprise internal fluid conduits (not shown) comprising fluid, which fluid may flow through the fluid conduits to transport heat to or from the battery cells 22 of the battery modules 1.

The top plate 12 may be offset from a top end 36 of the at least one battery cell 22, along the first axis z, such that a first ventilation volume 38 is formed in the enclosure 10 between the top plate 12 and the top end 36 of the at least one battery cell 22. The first ventilation volume 38 may be in fluid communication with the second type of gas vent 32. Thereby, any heated air or gases of the battery cells may flow via the first ventilation 38 volume towards the second type of vent 32 and exit the enclosure 10 via the second type of vent 32.

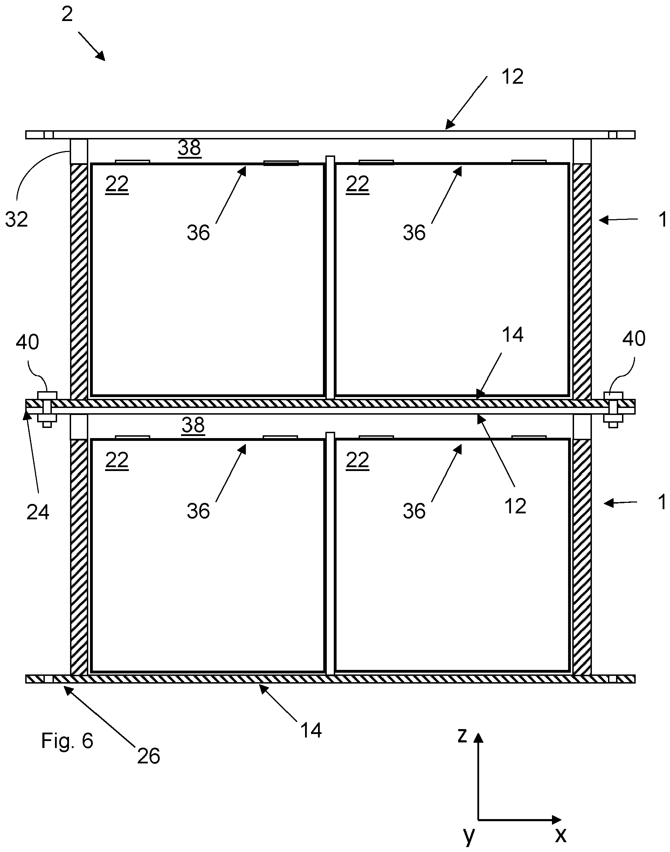

**Fig. 6** shows a battery stack 2 according to the second aspect of the disclosure. The battery stack 2 comprises at least two stackable battery modules 1 as described above. The battery stack has a top battery module 1 at a top end of the battery stack 2 and a bottom battery module 1 at a bottom end of the battery stack 2, as seen along the first axis z. A stackable battery module of the at least two stackable battery modules 1 may be stacked and adjacent at least one further battery module 1 along the first axis z such that the mounting hole 28 of the bottom flange 26 of one stackable battery module 1 is aligned with the mounting hole 28 of the top flange 24 of the adjacent stackable battery module 1 and wherein the at least two stackable battery modules 1 are fixed in relation to each other at the mounting holes 28 by a fastener 40. Thereby, the battery stack 2 of stacked battery modules 1 are fixed in relation to each other via the mounting holes 28, along the first axis z, enabling a more compact battery stack 2 and increased volumetric energy efficiency.

Adjacent stackable battery modules 1 may be physically in contact with each other via adjacent top plates 12 and bottom plates 14 of the respective battery modules 1. A technical benefit may include that a height of the battery stack 2 along the first axis z is reduced, as compared to prior art, and that energy storage capability and/or volumetric energy efficiency is further improved.

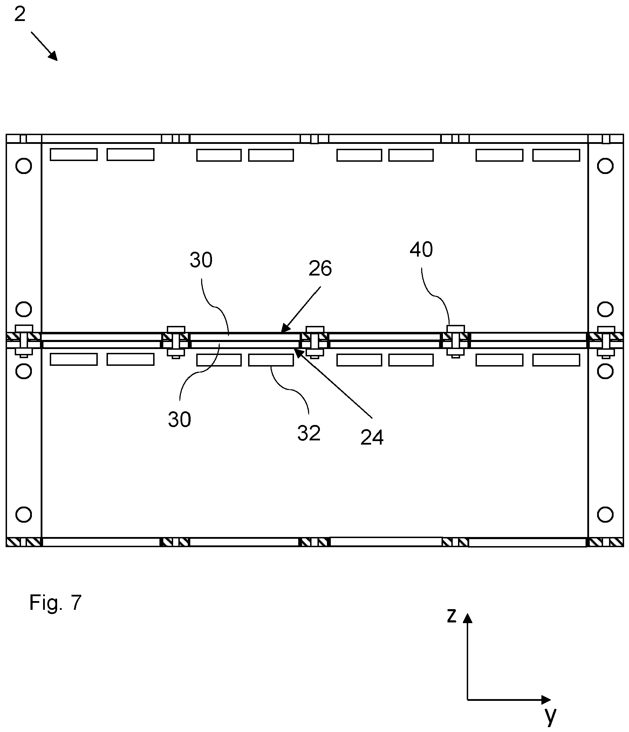

As shown in **Fig. 7****,** The first type of gas vent 30 of the bottom flange 26 of one stackable battery module 1 may be aligned with the first type of gas vent 30 of the top flange 24 of the adjacent stackable battery module 1 such that fluid communication is enabled between the at least two stackable battery modules 1 along the first axis z via the first type of gas vent 30 of the respective stackable battery module 1. Fluid communication along a whole battery stack 2 of battery modules 1, from a bottom battery module 1 to a top battery module 1, via the first type of gas vent 30 of the respective battery modules 1, is thereby enabled.

**Fig. 8** shows the third aspect of the disclosure. A battery compartment 3 comprises a housing 42 and the battery stack 2 as described above. The housing 42 comprises housing walls 44 parallel with the first axis z. The housing walls 44 at least partially enclose the battery stack 2. The housing walls 44 and the side walls 16 of the stackable battery modules 1 form gas chimneys 48 which extend along the first axis z between the side walls 16 and the housing walls 44. The gas chimneys 48 are partitioned along the first axis z by the first type of gas vent 30. Each of the gas chimneys 48 is in fluid communication with the first ventilation volume 38 of the respective battery module 1 via the second type of gas vent 32. Volumetric energy efficiency is increased by integrating the gas chimneys 48 in the stack of battery modules 1 by enabling fluid communication through the first type of gas vent 30 in the flanges 24, 26 of the battery modules 1. Integration of the gas chimneys 48 is to be understood as the gas chimneys 48 occupying space which is in the battery stack 2 and in the battery modules 1, which means that the housing 42 may be made smaller since the conventional housing chimneys 480 are no longer needed inside the housing walls 440. See **Fig. 2****.**

The housing walls 44 may comprise at least one housing vent 54 configured to enable fluid communication through the housing wall 44 between the gas chimneys 48 of the battery compartment 3 and an outside of the battery compartment 3 to ventilate an overpressure of hot air or gases from the battery compartment 3.

The at least one housing vent 54 comprises a degassing unit. The degassing unit may serve to equalize pressure in the battery compartment 3. During thermal runaway, heat and gases may build a pressure in the battery compartment 3. At a certain pressure threshold, the degassing unit may open to release the pressure. The degassing unit may alternatively equalize an underpressure in the battery compartment 3 with ambient pressure outside the housing/battery compartment 3.

The battery compartment 3 may further comprise at least one support surface 50 fixed in relation to said battery compartment 3. The support surface 50 may have at least one support fixation point 52 formed thereon. The mounting hole 28 of the bottom flange 26 of the bottom battery module 1 of the battery stack 2 and the fixation point 52 of the support surface 50 may be in alignment. The battery stack 2 may be fixed to said support surface 50 at least at one fixation point 52 by a fastener 40. The entire battery stack 2 may thus be attached to and assembled with the battery compartment 3 by fixing the bottom battery module 1 to the support surface 50. The battery stack 2 may further be supported, in a lateral, e.g. horizontal, direction in relation to the housing 42, by the top and bottom flanges 24, 26 of the battery modules 1 abutting the housing walls 44 of the battery compartment 3.

A layer of thermal insulation (not shown) may be sandwiched between the bottom battery module 1 and the support surface 50. A bottom of the battery compartment 3 may thereby be thermally insulated from the battery stack 2 of battery modules 1. The battery compartment 3 may thus be thermally insulated from heat generated by the battery modules 1 of the battery stack 2 and the heat is prevented from affecting an ambient surrounding of the battery compartment 3.

As described in conjunction with **Fig. 1** above, the fourth aspect of the disclosure relates to a vehicle 4 comprising the battery compartment 3, as described above. Such a vehicle 4 has an increased volumetric energy efficiency, which improves energy storage capability of the vehicle.

### LIST OF EXAMPLES

1. A stackable battery module (1) having a first extension along a first axis (z), a second extension along a second axis (x) and a third extension along a third axis (y), said first, second and third axes (z, x, y) being perpendicular to each other, the battery module (1) comprising:
   - an enclosure (10) formed by a top plate (12), a bottom plate (14) and side walls (16), the top plate (12) and the bottom plate (14) extending orthogonally to the first axis (z), and the side walls (16) having a first end (18) adjacent to the top plate (12) and a second end (20) adjacent to the bottom plate (14), the side walls (16) extending in parallel with the first axis (z) between the top plate (12) and the bottom plate (14),
   - at least one battery cell (22), at least partially enclosed by the enclosure (10),
   - the enclosure (10) comprising a top flange (24) and a bottom flange (26) arranged at least along a part of a perimeter of the enclosure (10) around the first axis (z), the top flange (24) and the bottom flange (26) extending in a plane parallel with the second axis and the third axis, away from the enclosure (10),
   wherein the top flange (24) and the bottom flange (26) each comprises a mounting hole (28) and a first type of gas vent (30), the first type of gas vent (30) being configured to enable fluid communication through the respective flange (24, 26), and wherein a second type of gas vent (32) is arranged at the first end (18) and/or at the second end (20) of the side walls (16), the second type of gas vent (32) being configured to enable fluid communication through the side walls (16).
2. The stackable battery module (1) of example 1, wherein each one of the top flange (24) and the bottom flange (26) comprises a plurality of mounting holes (28) and a plurality of the first type of gas vents (30), and wherein the mounting holes (28) and the plurality of the first type of gas vents (30) are alternatingly arranged along the perimeter of the enclosure (10) around the first axis (z).
3. The stackable battery module (1) of any of examples 1-2, wherein the first type of gas vent (30) is aligned with the second type of gas vent (32) along the perimeter of the enclosure (10) around the first axis (z).
4. The stackable battery module (1) of any of examples 1-3, wherein the first type of gas vent (30) is a cutout (34) in the top flange (24) and/or the bottom flange (26).
5. The stackable battery module (1) of any of the previous examples, wherein the top flange (24) and/or the bottom flange (26) are integral extensions of the top plate (12) and the bottom plate (14), respectively.
6. The stackable battery module (1) of any of the previous examples, wherein the battery module (1) is configured to be stacked along the first axis (z) with at least one further battery module (1), and wherein the mounting hole (28) of the top flange (24) is configured to be aligned with a mounting hole (28) of a bottom flange (26) of the at least one further battery module (1), and/or wherein the mounting hole (28) of the bottom flange (26) is configured to be aligned with a mounting hole (28) of a top flange (24) of the at least one further battery module (1).
7. The stackable battery module (1) of any of the previous examples, wherein the at least one battery cell (22) is arranged on the bottom plate (14), physically in contact with the bottom plate (14).
8. The stackable battery module (1) of any of the previous examples, wherein the bottom plate (14) is a thermal plate.
9. The stackable battery module (1) of any of examples 6-8, wherein the top plate (12) is offset from a top end (36) of the at least one battery cell (22), along the first axis (z), such that it forms a first ventilation volume (38) in the enclosure (10) between the top plate (12) and the top end (36) of the at least one battery cell (22), the ventilation volume (38) being in fluid communication with the second type of gas vent (32).
10. A battery stack (2) comprising at least two stackable battery modules (1) according to any of examples 1-9, the battery stack (2) having a top battery module (1) at a top end of the battery stack (2) and a bottom battery module (1) at a bottom end of the battery stack (2), as seen along the first axis (z), a stackable battery module (1) of the at least two stackable battery modules (1) being stacked and adjacent at least one further battery module (1) along the first axis (z) such that the mounting hole (28) of the bottom flange (26) of one stackable battery module (1) is aligned with the mounting hole (28) of the top flange (24) of the adjacent stackable battery module (1) and wherein the at least two stackable battery modules (1) are fixed in relation to each other at the mounting holes (28) by a fastener (40).
11. The battery stack (2) of example 10, wherein adjacent stackable battery modules (1) are physically in contact with each other via adjacent top plates (12) and bottom plates (14) of the respective battery modules (1).
12. The battery stack (2) of any of examples 10-11, wherein the first type of gas vent (30) of the bottom flange (26) of one stackable battery module (1) is aligned with the first type of gas vent (30) of the top flange (24) of the adjacent stackable battery module (1) such that fluid communication is enabled between the at least two stackable battery modules (1) along the first axis (z) via the first type of gas vent (30) of the respective stackable battery module (1).
13. A battery compartment (3) comprising a housing (42) and the battery stack (2) according to any of examples 10-12, wherein the housing (42) comprises housing walls (44) parallel with the first axis (z), which housing walls (44) at least partially enclose the battery stack (2), wherein the housing walls (44) and the side walls (16) of the stackable battery modules (1) form gas chimneys (48) extending along the first axis (z) between the side walls (44) and the housing walls (44), the gas chimneys (48) being partitioned along the first axis (z) by the first type of gas vent (30), and wherein each of the gas chimneys (48) is in fluid communication with the first ventilation volume (38) of the respective battery module (1) via the second type of gas vent (32).
14. The battery compartment (3) according to example 13, wherein the housing walls (44) comprise at least one housing vent (54) configured to enable fluid communication through the housing wall (44) between the gas chimney (48) of the battery compartment (3) and an outside (56) of the battery compartment.
15. The battery compartment (3) according to example 14, wherein the at least one housing vent (54) comprises a degassing unit.
16. The battery compartment (3) according to any of examples 13-15, further comprising at least one support surface (50) fixed in relation to said battery compartment (3), the support surface (50) having at least one support fixation point (52) formed thereon, wherein the mounting hole (28) of the bottom flange (16) of the bottom battery module (1) of the battery stack (2) and the fixation point (52) of the support surface (50) are in alignment and the battery stack (2) is fixed to said support surface (50) at least at one fixation point (52) by a fastener (40).
17. The battery compartment of example 16, wherein a layer of thermal insulation is sandwiched between the bottom battery module (1) and the support surface (50).
18. A vehicle (4) comprising the battery compartment (3) according to any of examples 13-17.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A stackable battery module (1) having a first extension along a first axis (z), a second extension along a second axis (x) and a third extension along a third axis (y), said first, second and third axes (z, x, y) being perpendicular to each other, the battery module (1) comprising:
- an enclosure (10) formed by a top plate (12), a bottom plate (14) and side walls (16), the top plate (12) and the bottom plate (14) extending orthogonally to the first axis (z), and the side walls (16) having a first end (18) adjacent to the top plate (12) and a second end (20) adjacent to the bottom plate (14), the side walls (16) extending in parallel with the first axis (z) between the top plate (12) and the bottom plate (14),
- at least one battery cell (22), at least partially enclosed by the enclosure (10),
- the enclosure (10) comprising a top flange (24) and a bottom flange (26) arranged at least along a part of a perimeter of the enclosure (10) around the first axis (z), the top flange (24) and the bottom flange (26) extending in a plane parallel with the second axis and the third axis, away from the enclosure (10),
wherein the top flange (24) and the bottom flange (26) each comprises a mounting hole (28) and a first type of gas vent (30), the first type of gas vent (30) being configured to enable fluid communication through the respective flange (24, 26), and wherein a second type of gas vent (32) is arranged at the first end (18) and/or at the second end (20) of the side walls (16), the second type of gas vent (32) being configured to enable fluid communication through the side walls (16).

2. The stackable battery module (1) of claim 1, wherein each one of the top flange (24) and the bottom flange (26) comprises a plurality of mounting holes (28) and a plurality of the first type of gas vents (30), and wherein the mounting holes (28) and the plurality of the first type of gas vents (30) are alternatingly arranged along the perimeter of the enclosure (10) around the first axis (z).

3. The stackable battery module (1) of any of claims 1-2, wherein the first type of gas vent (30) is aligned with the second type of gas vent (32) along the perimeter of the enclosure (10) around the first axis (z).

4. The stackable battery module (1) of any of claims 1-3, wherein the first type of gas vent (30) is a cutout (34) in the top flange (24) and/or the bottom flange (26).

5. The stackable battery module (1) of any of the previous claims, wherein the top flange (24) and/or the bottom flange (26) are integral extensions of the top plate (12) and the bottom plate (14), respectively, or wherein the top flange (24) and/or the bottom flange (26) are integral extensions of the side walls (16), extending orthogonally from the side walls (16).

6. The stackable battery module (1) of any of the previous claims, wherein the battery module (1) is configured to be stacked along the first axis (z) with at least one further battery module (1), and wherein the mounting hole (28) of the top flange (24) is configured to be aligned with a mounting hole (28) of a bottom flange (26) of the at least one further battery module (1), and/or wherein the mounting hole (28) of the bottom flange (26) is configured to be aligned with a mounting hole (28) of a top flange (24) of the at least one further battery module (1).

7. The stackable battery module (1) of any of the previous claims, wherein the at least one battery cell (22) is arranged on the bottom plate (14), physically in contact with the bottom plate (14).

8. The stackable battery module (1) of any of the previous claims, wherein the bottom plate (14) is a thermal plate.

9. The stackable battery module (1) of any of claims 6-8, wherein the top plate (12) is offset from a top end (36) of the at least one battery cell (22), along the first axis (z), such that it forms a first ventilation volume (38) in the enclosure (10) between the top plate (12) and the top end (36) of the at least one battery cell (22), the ventilation volume (38) being in fluid communication with the second type of gas vent (32).

10. A battery stack (2) comprising at least two stackable battery modules (1) according to any of claims 1-9, the battery stack (2) having a top battery module (1) at a top end of the battery stack (2) and a bottom battery module (1) at a bottom end of the battery stack (2), as seen along the first axis (z), a stackable battery module (1) of the at least two stackable battery modules (1) being stacked and adjacent at least one further battery module (1) along the first axis (z) such that the mounting hole (28) of the bottom flange (26) of one stackable battery module (1) is aligned with the mounting hole (28) of the top flange (24) of the adjacent stackable battery module (1) and wherein the at least two stackable battery modules (1) are fixed in relation to each other at the mounting holes (28) by a fastener (40).

11. The battery stack (2) of claim 10, wherein the first type of gas vent (30) of the bottom flange (26) of one stackable battery module (1) is aligned with the first type of gas vent (30) of the top flange (24) of the adjacent stackable battery module (1) such that fluid communication is enabled between the at least two stackable battery modules (1) along the first axis (z) via the first type of gas vent (30) of the respective stackable battery module (1).

12. A battery compartment (3) comprising a housing (42) and the battery stack (2) according to any of claims 10-12, wherein the housing (42) comprises housing walls (44) parallel with the first axis (z), which housing walls (44) at least partially enclose the battery stack (2), wherein the housing walls (44) and the side walls (16) of the stackable battery modules (1) form gas chimneys (48) extending along the first axis (z) between the side walls (44) and the housing walls (44), the gas chimneys (48) being partitioned along the first axis (z) by the first type of gas vent (30), and wherein each of the gas chimneys (48) is in fluid communication with the first ventilation volume (38) of the respective battery module (1) via the second type of gas vent (32).

13. The battery compartment (3) according to claim 12, further comprising at least one support surface (50) fixed in relation to said battery compartment (3), the support surface (50) having at least one support fixation point (52) formed thereon, wherein the mounting hole (28) of the bottom flange (16) of the bottom battery module (1) of the battery stack (2) and the fixation point (52) of the support surface (50) are in alignment and the battery stack (2) is fixed to said support surface (50) at least at one fixation point (52) by a fastener (40).

14. The battery compartment of claim 13, wherein a layer of thermal insulation is sandwiched between the bottom battery module (1) and the support surface (50).

15. A vehicle (4) comprising the battery compartment (3) according to any of claims 12-14.
